# EUROPÄISCHE PATENTSCHRIFT

(11) **EP 2 424 767 B1**
(45) Veröffentlichungstag und Bekanntmachung des Hinweises auf die Patenterteilung: **01.05.2013**
(21) Anmeldenummer: 10703857.2
(22) Anmeldetag: 11.02.2010
(51) Int. Cl.: B62D 6/00, B62D 113/00, B62D 119/00, B62D 121/00, B62D 137/00

(54) **BESTIMMUNG EINER AUF EIN LENKGETRIEBE EINWIRKENDEN KRAFT**
DETERMINATION OF A FORCE ACTING ON A STEERING MECHANISM
DÉTERMINATION D'UNE FORCE QUI AGIT SUR UN MÉCANISME DE DIRECTION

(30) Priorität: 29.04.2009 DE 102009002706
(43) Veröffentlichungstag der Anmeldung: 07.03.2012
(73) Patentinhaber: ZF-Lenksysteme GmbH, 73527 Schwäbisch Gmünd (DE)
(72) Erfinder: GRÜNER, Stefan, 71549 Auenwald (DE); WERNER, Thomas, 73492 Rainau (DE)
(86) Internationale Anmeldenummer: PCT/EP2010/051665
(87) Internationale Veröffentlichungsnummer: WO 2010/124884

(56) Entgegenhaltungen:
- EP-A2- 2 050 655

## Beschreibung

Die Erfindung betrifft ein Verfahren zur Bestimmung einer über ein Lenkgestänge auf ein Lenkgetriebe einer Lenkvorrichtung in einem Fahrzeug von außen einwirkenden Kraft mittels eines Schätzers, wobei der Lenkvorrichtung ein Motor zur Erzeugung eines Lenkmoments zugeordnet ist.

Die Erfindung betrifft ferner ein Steuergerät zur Steuerung/Regelung einer Lenkvorrichtung in einem Fahrzeug, wobei die Lenkvorrichtung ein Lenkgestänge, ein Lenkgetriebe und einen Motor zur Erzeugung eines Lenkmoments umfasst und wobei das Steuergerät Mittel zur Erfassung eines Motormoments des Motors und einen Schätzer zur Bestimmung einer von außen auf das Lenkgetriebe einwirkenden Kraft aufweist.

Die Erfindung betrifft ferner ein Computerprogramm, das auf einem Steuergerät zur Steuerung/Regelung einer Lenkvorrichtung ablauffähig ist.

Bei modernen Lenkvorrichtungen, insbesondere bei einer elektrischen Servolenkung (EPS) oder bei einem so genannten Steer-by-Wire (SbW) Lenksystem, wird ein Kraftniveau ermittelt, das dann an einem Lenkmittel, beispielsweise einem Lenkrad, anliegt und der von dem Fahrer aufgebrachten Kraft entgegenwirkt bzw. die von dem Fahrer aufgebrachte Kraft verstärkt, um dem Fahrer ein der aktuellen Fahrsituation entsprechendes Fahrgefühl zu vermitteln und beispielsweise Informationen über die aktuelle Fahrbahnbeschaffenheit über das Lenkrad zurückzumelden. Die Höhe dieses Kraftniveaus hängt damit von dem aktuellen Fahrzustand und insbesondere von den Seitenführungskräften beziehungsweise den daraus resultierenden Kräften ab, die über ein Lenkgestänge, beispielsweise Spurstangen, auf die Lenkung einwirken.

Für die Bestimmung des Kraftniveaus ist es bekannt, eine Seitenführungskraft aus einer mit entsprechenden Sensoren gemessenen Querbeschleunigung zu bestimmen. Es ist ebenfalls bekannt, die Querbeschleunigung mittels eines Fahrzeugmodells aus einem aktuellen Lenkwinkel und einer aktuellen Fahrzeuggeschwindigkeit zu bestimmen und daraus auf die Seitenführungskraft zu schließen. Hierbei muss für jedes Fahrzeug, in dem die Querbeschleunigung solcherart bestimmt werden soll, ein geeignetes Fahrzeugmodell erzeugt werden, was jedoch sehr zeitaufwändig und kostenintensiv ist.

In der DE 101 15 018 A1 ist ein Verfahren beschrieben, mittels dessen das gewünschte Kraftniveau aus lenkungsinternen Signalen berechnet beziehungsweise eingestellt wird. Hierzu wird zunächst ein Motormoment für einen der Lenkung zugeordneten Elektromotor bestimmt, das notwendig ist, um ein momentenfreies Lenken zu ermöglichen. Dieses Motormoment wird dann mit einem Faktor multipliziert, der von einer aktuellen Fahrzeuggeschwindigkeit und einem aktuellen von einem Fahrer aufgebrachten Handmoment abhängt. Dies ergibt dann das gewünschte Kraftniveau.

Aus der DE 101 15 018 A1 ist es ferner bekannt, Störgrößen wie beispielsweise Spurstangenkräfte für die Berechnung des gewünschten Kraftniveaus heranzuziehen. Derartige Störgrößen sind zwar prinzipiell messbar, aus Kostengründen wird eine entsprechende Messtechnik in Fahrzeugen jedoch nicht eingesetzt. Diese Störgrößen werden deshalb geschätzt.

In der EP 2 050 655 A2 wird ein Verfahren zur Schätzung einer von außen auf ein Lenkgetriebe einwirkenden Kraft offenbart. Hierbei wird ein Soll-Unterstützungsmoment in Abhängigkeit eines Drehmoment-Sensor-Werts ermittelt, wobei ein Kompensationsanteil zur Stabilisierung additiv hinzugefügt wird, um eine verbesserte Fahrer-Rückmeldung zu erreichen.

Aufgabe der vorliegenden Erfindung ist es, eine Möglichkeit zur Bestimmung von Spurstangenkräften, beziehungsweise allgemein von über ein Lenkgestänge auf ein Lenkgetriebe von außen einwirkenden Kräften bereitzustellen. Derartige von außen einwirkende Kräfte sind überwiegend so genannte Seitenführungskräfte, die den so genannten Spurstangenkräften entsprechen. Ist die Lenkvorrichtung als Zahnstangenlenkung ausgebildet, so wirken die Spurstangenkräfte auf die mit den Spurstangen verbundene Zahnstange ein. Die Spurstangenkräfte entsprechen damit - bis auf eventuell zu berücksichtigende Reibungs- und/oder Trägheitseffekte, den so genannten Zahnstangenkräften.

Die Aufgabe wird durch ein Verfahren der eingangs genannten Art dadurch gelöst, dass die von außen einwirkende Kraft in Abhängigkeit von einem effektiven Motormoment geschätzt wird, wobei das effektive Motormoment in Abhängigkeit von einem Motormoment und einem Wirkungsgrad bestimmt wird und wobei der Wirkungsgrad in Abhängigkeit von der geschätzten Kraft bestimmt wird.

Das Motormoment ist das Moment, das der beispielsweise als Elektromotor oder Servomotor ausgebildete Motor zur Erzeugung des Lenkmoments beiträgt. Dieses Motormoment wird nun nicht direkt dem Schätzer bzw. dem Beobachter zugeführt, sondern es wird mit einem Wirkungsgrad verrechnet. Beispielsweise wird das Motormoment mit dem Wirkungsgrad multipliziert. Der Wirkungsgrad wiederum wird in Abhängigkeit von der geschätzten Kraft ermittelt. Es findet folglich eine Rückkopplung der geschätzten Kraft insofern statt, als die geschätzte Kraft jeweils Einfluss auf die Bestimmung des effektiven Motormoments hat, welches wiederum für die Bestimmung bzw. Beobachtung der von außen einwirkenden Kraft herangezogen wird, wobei das effektive Motormoment dem Schätzer als Eingabegröße zugeführt wird.

Der erfindungsgemäß bestimmte Wirkungsgrad ist also lastabhängig. Somit ist eine besonders genaue Bestimmung der von außen einwirkenden Kraft beziehungsweise der Zahnstangenkraft möglich. Das erfindungsgemäße Verfahren arbeitet besonders effizient, da eine Rückkopplung einfach realisierbar ist und eine präzise Bestimmung des Wirkungsgrades ermöglicht.

Vorzugsweise wird die Kraft zusätzlich in Abhängigkeit von einem Rotorwinkel des Motors geschätzt. Der Rotorwinkel entspricht einem aktuellen Lenkwinkel, so dass statt des Rotorwinkels ebenso ein auf andere Weise, beispielsweise mittels eines Winkelsensors erfasster Lenkwinkel verwendet werden kann. Der Rotorwinkel wird als weitere Eingabe dem Schätzer zugeführt. Mittels der erfassten Rotorwinkel bzw. Lenkwinkel kann auf einen Bewegungszustand der Lenkung geschlossen werden. Vorteilhafterweise wird eine Summe aus einem über die Lenkwelle auf die Lenkung wirkenden Lenkmoment und dem Motormoment gebildet. Das effektive Motormoment wird dann in Abhängigkeit von dieser Summe bestimmt. Die Summe beschreibt damit das fahrzeugseitig tatsächlich auf das Lenkgetriebe beziehungsweise die Zahnstange wirkende Moment, dem die von außen wirkenden Kräfte entgegenwirken. Zur Erfassung des über die Lenkwelle auf die Lenkung wirkenden Lenkmoments kann an dem Drehstab ein geeigneter Sensor angebracht sein, mittels dessen das von einem Fahrer beispielsweise an einem Lenkrad aufgebrachte Moment ermittelt wird. Besonders vorteilhaft ist es, wenn hierbei Verluste berücksichtigt werden, die beispielsweise durch Gelenke oder Führungen beziehungsweise Lagerungen des Drehstabs und/oder in dem Lenkgetriebe entstehen. Damit kann folglich die Genauigkeit der geschätzten Kraft nochmals erhöht werden.

Das Motormoment kann in einer Ausführungsform ein Ist-Moment beschreiben. Damit werden folglich Kräfte bestimmt, die zum Zeitpunkt der Erfassung des Ist-Moments anlagen. Besonders vorteilhaft ist es, wenn das Motormoment ein Soll-Moment beschreibt. Somit kann während der Motor zur Erreichung des Soll-Moments angesteuert wird, bereits die bezüglich dieses Soll-Moments dann von außen wirkenden Kräfte ermittelt werden, die dann zur Einstellung des gewünschten, arn Lenkrad darzustellenden Kraftniveaus bereits berücksichtigt werden können. Damit ist eine besonders verzögerungsfreie Darstellung des Kraftniveaus an dem Lenkrad möglich.

Vorzugsweise wird auch das effektive Motormoment in Abhängigkeit von dem Lenkwinkel bzw. dem aktuellen Rotorwinkel des Motors ermittelt. Da der Rotorwinkel und damit der Lenkwinkel einen Einfluss auf die Übertragung der von außen wirkenden Kräfte auf die Lenkung haben, wird durch Berücksichtigung des Rotorwinkels bzw. des Lenkwinkels eine verbesserte Bestimmung des effektiven Motormoments erreicht, was eine noch präzisiere Bestimmung der zu berücksichtigenden von außen wirkenden Kräfte ermöglicht.

In einer bevorzugten Ausführungsform wird der Wirkungsgrad mittels einer Kennlinie ermittelt. Dies ermöglicht eine besonders rasche Ermittlung des Wirkungsgrads während eines Betriebs des Fahrzeugs.

In einer weiteren bevorzugten Ausführungsform wird der Wirkungsgrad in Abhängigkeit von einer Leistungsflussrichtung des Motors ermittelt. Hierbei wird unterschieden, ob der Motor generatorisch oder motorisch betrieben wird und es werden dann unterschiedliche Wirkungsgrade bestimmt, die beispielsweise aus unterschiedlichen Kennlinien entnommen werden. Der Motor wird generatorisch betrieben, wenn die Lenkung aufgrund der von außen einwirkenden Kraft auf den Motor einwirkt. Ein motorischer Betrieb des Motors ist dann gegeben, wenn der Motor auf die Lenkung und damit letztendlich auf die Räder einwirkt.

Vorteilhafterweise wird die Leistungsflussrichtung in Abhängigkeit von dem Motormoment und dem Rotorwinkel des Motors ermittelt. Dies ermöglicht eine Bestimmung der Leistungsflussrichtung aus bereits vorhandenen Werten.

Die Aufgabe wird auch durch ein Steuergerät der eingangs genannten Art dadurch gelöst, dass das Steuergerät Mittel zur Durchführung des erfindungsgemäßen Verfahrens aufweist.

Von besonderer Bedeutung ist die Realisierung des erfindungsgemäßen Verfahrens in der Form eines Computerprogramms, das auf einem Steuergerät zur Steuerung einer Lenkeinrichtung in einem Fahrzeug und insbesondere auf einem Mikroprozessor in dem Steuergerät ablauffähig ist und zur Ausführung des erfindungsgemäßen Verfahrens programmiert ist. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm programmiert ist. Das Computerprogramm ist vorzugsweise auf einem Speicherelement abgespeichert. Als Speicherelement kann insbesondere ein optisches, elektrisches oder magnetisches Speichermedium zur Anwendung kommen, beispielsweise eine Digital Versatile Disc (DVD), eine Festplatte (Hard Disc), ein Random-Access-Speicher, ein Read-Only-Speicher oder ein Flash-Speicher.

### Zeichnungen

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden. Es zeigen:
- Figur 1: eine Lenkvorrichtung mit einem erfindungsgemäßen Steuergerät:
- Figur 2: ein schematisiertes Blockschaltbild zur Darstellung der rückgekoppelten Struktur mit Schätzer und einer Funktionalität zur Wirkungsgradberechnung; und
- Figur 3: ein schematisiertes Blockschaltbild einer Funktionalität zur Wirkungsgradberechnung.

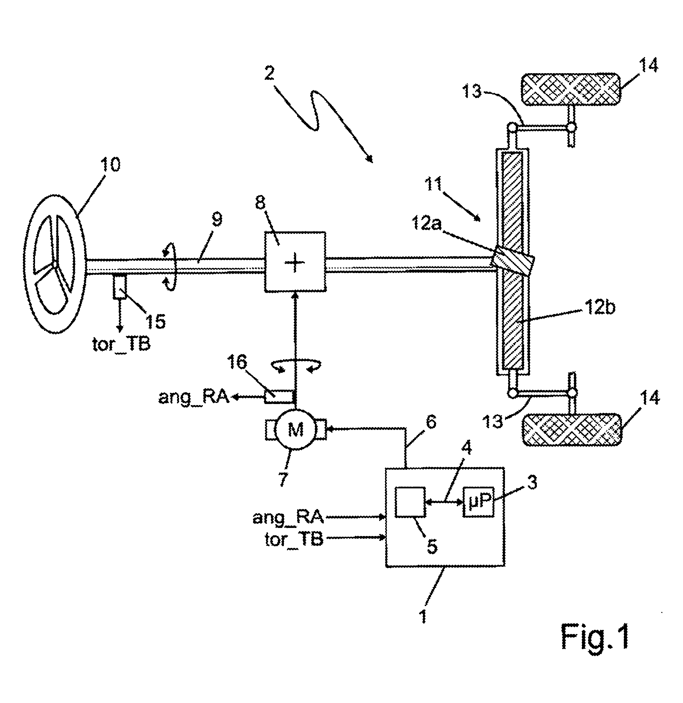

In Figur 1 ist ein Steuergerät 1 dargestellt, das einer Lenkvorrichtung 2 zugeordnet ist. In dem Steuergerät 1 ist ein Mikroprozessor 3 angeordnet, der über eine Datenleitung 4, beispielsweise ein Bussystem, mit einem Speicherelement 5 verbunden ist. Über eine Signalleitung 6 ist das Steuergerät 1 mit einem Motor 7 verbunden, wodurch eine Steuerung und/oder Regelung des Motors 7 durch das Steuergerät 1 ermöglicht wird. Der Motor 7 ist beispielsweise als Elektromotor ausgebildet und wirkt über ein Getriebe 8 auf einen Drehstab 9. An dem Drehstab 9 ist ein Lenkmittel 10, beispielsweise ein Lenkrad angeordnet, mittels dessen ein Drehmoment auf den Drehstab 9 durch Betätigen des Lenkmittels 10 durch einen Fahrer aufbringbar ist.

Die Lenkvorrichtung 2 weist ferner ein Lenkgetriebe 11 auf, das beispielsweise als Zahnstangenlenkgetriebe ausgebildet ist. Das Lenkgetriebe 11 kann aber auch als Kugelumlaufgetriebe beziehungsweise als Kugelmuttergetriebe ausgebildet sein. In der folgenden Beschreibung wird überwiegend von einer Zahnstangenlenkung ausgegangen, wobei das Lenkgetriebe ein Ritzel 12a und eine Zahnstange 12b umfasst. Jedoch ist für die Erfindung die Art der Lenkung unerheblich. Die in Figur 1 dargestellte Lenkvorrichtung 2 könnte statt als Zahnstangenlenkung beispielsweise als eine Kugelmutterlenkung oder eine Einzelradlenkung realisiert sein.

Das Lenkgetriebe 11 ist über das Ritzel 12a und die Zahnstange 12b auf jeder Fahrzeugseite mit einem Lenkgestänge 13 verbunden, das mit einem Rad 14 zusammenwirkt.

Die Lenkvorrichtung 2 weist ferner einen Momentensensor 15 zur Erfassung eines über eine Lenkwelle auf die Lenkung wirkenden Lenkmoments auf. Gemäß dem in Figur 1 dargestellten Ausführungsbeispiel wird hierzu mittels des Momentensensors 15 ein Drehstabmoments tor_TB erfasst, das dem oben genannten Lenkmoment entspricht. Die Lenkvorrichtung 2 weist auch einen Winkelsensor 16 zur Erfassung eines Rotorwinkels ang_RA des Motors 7 auf. Der Rotorwinkel ang_RA entspricht einem Drehwinkel des Drehstabs 9 und damit einem Lenkwinkel der Räder 14, da der Motor 7 über das Getriebe 8 mit dem Drehstab 9 und dieser über das Lenkgetriebe 11 und das Lenkgestänge 13 mit den Rädern 14 verbunden ist.

Die mittels der Sensoren 15 und 16 erfassten Werte werden dem Steuergerät 1 zugeführt.

Die in Figur 1 dargestellte Lenkvorrichtung stellt eine von einer Vielzahl von möglichen Ausführungsformen von für die Durchführung des erfindungsgemäßen Verfahrens geeigneten Lenkvorrichtungen dar. In einer anderen Ausführungsform ist beispielsweise das Lenkgetriebe als Kugelmuttergetriebe ausgebindet Gemäß einem anderen Ausführungsbeispiel kann der Motor 7 auch derart angeordnet sein, dass er zusammen mit dem Drehstab 9 auf das in dem Lenkgetriebe 11 angeordnete Ritzel 12a wirkt oder direkt - mittels eines weiteren Ritzels - auf die Zahnstange 12b wirkt.

Gemäß einer weiteren Ausführungsform wird statt des Rotorwinkels ang_RA eine andere, eine aktuelle Position der Lenkvorrichtung 2 beschreibende Größe ermittelt bzw. zur Durchführung des erfindungsgemäßen Verfahrens herangezogen. Beispielsweise kann mittels eines Winkelsensors, der an dem Drehstab 9 angeordnet ist, der Lenkwinkel ermittelt werden. Eine aktuelle Position der Lenkvorrichtung 2 könnte ferner mittels eines Sensors erfasst werden, der an der Zahnstange 12b angeordnet ist. Grundsätzlich könnten hier eine Vielzahl bekannter Größen bestimmt bzw. herangezogen werden. Die Verwendung des Rotorwinkels ang_RA hat jedoch den Vorteil, dass dieser sehr präzise bestimmbar ist und in modernen Lenkvorrichtungen häufig bereits zur Verfügung steht.

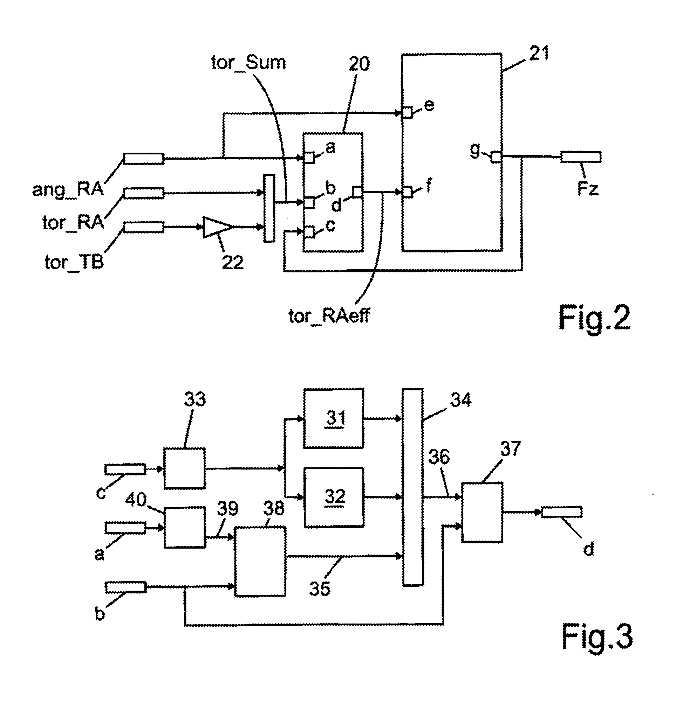

In Figur 2 sind eine Funktionalität 20 zur Wirkungsgradberechnung und ein Schätzer 21 dargestellt. Die Funktionalität 20 weist Eingänge a, b, c und einen Ausgang d auf. Der Schätzer 21 weist Eingänge e, f und einen Ausgang g auf.

Der Schätzer 21 ermittelt von außen auf die Lenkung einwirkende Kräfte Fz aus einem Motorwinkel ang_RA und dem von der Funktionalität 20 bereitgestellten effektiven Motormoment tor_RAeff. Der Schätzer 21 kann hierbei beispielsweise als so genannter Pertubation Observer (PO) ausgebildet sein, der die Berechnung eines Motormoments ermöglicht, mit der eine Störgröße kompensierbar ist, wobei die von außen einwirkende Kraft beziehungsweise die daraus resultierende Zahnstangenkraft als zu kompensierende Störgröße betrachtet wird. Pertubation Observer sind beispielsweise beschrieben in "SangJoo Kwon und Wan Kyun Chung; Pertubation Compensator based Robust Tracking Control and State Estimation of Mechanical Systems; Lecture Notes in Control and Information Sciences No. 307, 2004".

Der Schätzer 21 kann auch als sogenannter "Unknown Input Observer" (UIO) ausgebildet sein. Mittels eines Unknown Input Observer ist die Bestimmung unbekannter Eingangsgrößen möglich. Hierzu wird die Zahnstangenkraft beziehungsweise die von außen einwirkende Kraft als unbekannte Eingangsgröße betrachtet. Unknown Input Observer sind beispielsweise beschrieben in "Pau-Lo Hsu, Yow-Choung Hong und Syh-Shiuh Yeh; Design of an Optimal Unknown Input Observer for Load Compensation in Motion Systems; in Asian Journal of Control, vol. 3, No. 3, pages 204 - 215, September 2001 ".

Mittels des Schätzers 21 ist prinzipiell die Bestimmung der Zahnstangenkraft beziehungsweise der von außen einwirkenden Kräfte Fz aus einem erfassten Motormoment tor_RA möglich. Jedoch weichen die so geschätzten Werte signifikant von tatsächlich gemessenen Werten ab, was zu unpräzisen und unzuverlässigen Werten und damit zu einem unzuverlässigen an dem Lenkrad darzustellenden Kraftniveaus führt.

Erfindungsgemäß wird deshalb nicht das Motormoment tor_RA direkt an den Schätzer 21 übermittelt, sondern es wird aus dem Motormoment tor_RA und dem Lenkmoment bzw. dem Drehstabmoment tor_TB mittels der Funktionalität 20 das effektive Motormoment tor_RAeff bestimmt, wobei ein Wirkungsgrad berücksichtigt wird. Die Funktionalität 20 erhält als Eingänge den Rotorwinkel ang_RA - beziehungsweise eine andere, die aktuelle Position der Lenkvorrichtung 2 kennzeichnende Größe - sowie eine als tor_Sum bezeichnete Summe aus dem Motormoment tor_RA und dem Drehstabmoment tor_TB. Das Drehstabmoment tor_TB wird gemäß der in Figur 2 gezeigten Ausführungsform nicht direkt zu dem Motormoment tor_RA addiert, sondern es werden in einem Element 22 Verluste berücksichtigt, die beispielsweise durch Reibung in Lagern, Gelenken und dergleichen entstehen und das mittels des Lenkmittels 10 aufgebrachte Moment reduzieren.

In Figur 2 ist ferner dargestellt, dass der von dem Schätzer 21 geschätzte Wert für die von außen einwirkende Kraft Fz von dem Ausgang g des Schätzers 21 zu dem Eingang c der Funktionalität 20 rückgeführt wird. Somit wird die geschätzte Zahnstangenkraft für die Bestimmung des effektiven Motormoments tor_RAeff durch Rückkopplung zur Verfügung gestellt.

In Figur 3 ist ein schematisches Blockschaltbild einer möglichen Ausführungsform der Funktionalität 20 dargestellt. Über die Eingänge a, b, c werden wie bezüglich der Figur 2 dargestellt, der Rotorwinkel ang_RA, das sich aus der Summe des Motormoments tor_RA und des Drehstabmoments tor_TB ergebende Summenmoment tor_Sum sowie die von dem Schätzer 21 an dem Ausgang g bereitgestellte Kraft Fz zugeführt.

In Abhängigkeit von der rückgekoppelten Kraft Fz wird aus Kennlinien 31, 32 der Wirkungsgrad bestimmt. Hierbei ist die Kennlinie 31 beispielsweise für einen motorischen Betrieb und die Kennlinie 32 für einen generatorischen Betrieb des Motors 7 vorgesehen. In einem Element 33 wird gemäß der in Figur 3 dargestellten möglichen Ausführungsform zunächst ein Absolutwert der Kraft Fz gebildet, so dass die Richtung der von außen einwirkenden Kraft unberücksichtigt bleiben kann. Es werden dann aus den Kennlinien 31 und 32 die zugehörigen Wirkungsgrade ausgelesen und an eine Funktionseinheit 34 übermittelt.

An der Funktionseinheit 34 liegt ferner ein Signal 35 an, das die Leistungsflussrichtung des Motors 7 beschreibt, also ob der Motor 7 motorisch oder generatorisch betrieben wird. In Abhängigkeit von dem Signal 35 wird in der Funktionseinheit 34 der Wirkungsgrad ausgewählt, der der aktuellen Leistungsflussrichtung entspricht. Der so ermittelte Wirkungsgrad wird dann über ein Signal 36 an eine Funktionseinheit 37 weitergeleitet, in der beispielsweise durch Multiplikation des Wirkungsgrads mit dem an dem Eingang b anliegenden Summenmoment tor_Sum das effektive Motormoment tor_RAeff bestimmt wird.

Das Signal 35 wird in einer Funktionseinheit 38 durch Multiplikation des Summenmoments tor_Sum mit einem aus dem Rotorwinkel ang_RA gebildeten Signal 39 erzeugt. Das Signal 39 wird in der Funktionseinheit 40 gebildet. Die Funktionseinheit 40 ermöglicht beispielsweise die Berücksichtigung von einer zeitlichen Dynamik, so dass eine leichte Trägheit des Gesamtsystems erreicht wird, wodurch dynamische Kräfte entsprechend berücksichtigt werden können.

Ein wesentliches Element der vorliegenden Erfindung ist, dass der Schätzer 21 nicht mit dem Motormoment tor_RA, sondern mit dem effektiven Motormoment tor_RAeff beaufschlagt wird, so dass ein lastabhängiger Wirkungsgrad berücksichtigt wird. Der Wirkungsgrad selbst wird auf Basis der geschätzten Zahnstangenkraft beziehungsweise der geschätzten von außen einwirkenden Kraft Fz bestimmt, so dass also eine Rückkopplung der geschätzten Kraft Fz stattfindet.

Selbstverständlich sind eine Vielzahl weiterer Ausführungsformen denkbar. Beispielsweise können weitere Funktionseinheiten vorgesehen sein, in denen weitere mögliche Reibungsverluste oder Temperaturabhängigkeiten berücksichtigt werden. Ferner ist es möglich, zunächst zu bestimmen, welche der Kennlinien 31, 32 aufgrund der aktuellen Leistungsflussrichtung verwendet werden sollen und erst dann aus der geeigneten Kennlinie den Wirkungsgrad auszulesen. Ferner kann die Funktionalität 20 auch in dem Schätzer 21 selbst realisiert werden.

Insbesondere kann das Verfahren auf vielfältige Weise in einem Computerprogramm codiert werden und somit in verschiedensten Funktionalitäten auf dem Steuergerät 1 ausgeführt werden. Das Computerprogramm kann hierbei auf einem Speicherelement aus einer Vielzahl von möglichen Speicherelementen abgespeichert sein, wobei das Speicherelement nicht notwendig in dem Steuergerät 1 angeordnet zu sein braucht.

## Patentansprüche

1. . Verfahren zur Bestimmung einer über ein Lenkgestänge (13) auf ein Lenkgetriebe (11) einer Lenkvorrichtung (2) in einem Fahrzeug von außen einwirkenden Kraft (Fz) mittels eines Schätzers (21), wobei der Lenkvorrichtung (2) ein Motor (7) zur Erzeugung eines Motormoments (tor_RA) zugeordnet ist, **dadurch gekennzeichnet, dass** die von außen einwirkende Kraft (Fz) in Abhängigkeit von einem effektiven Motormoment (tor_RAeff) mittels des Schätzers (21) geschätzt wird, wobei das effektive Motormoment (tor_RAeff) in Abhängigkeit von einem Wirkungsgrad bestimmt wird und wobei der Wirkungsgrad in Abhängigkeit von der geschätzten Kraft (Fz) ermittelt wird.

2. . Verfahren nach Anspruch 1, **dadurch gekennzeichnet, dass** die Kraft (Fz) in Abhängigkeit von einem Lenkwinkel, insbesondere von einem Rotorwinkel (ang_RA) des Motors (7), geschätzt wird.

3. . Verfahren nach Anspruch 1 oder 2, **dadurch gekennzeichnet, dass** ein Summenmoment (tor_Sum) als eine Summe aus einem über eine Lenkwelle auf die Lenkvorrichtung (2) wirkenden Lenkmoment (tor_TB) und dem Motormoment (tor_RA) gebildet wird und das effektive Motormoment (tor_RAeff) in Abhängigkeit von dem Summenmoment (tor_Sum) bestimmt wird.

4. . Verfahren nach einem der vorangehenden Ansprüche, **dadurch gekennzeichnet, dass** das Motormoment (tor_RA) ein Ist-Moment oder ein Soll-Moment beschreibt.

5. . Verfahren nach einem der vorangehenden Ansprüche, **dadurch gekennzeichnet, dass** das effektive Motormoment (tor_RAeff) in Abhängigkeit von einem Rotorwinkel (ang_RA) des Motors (7) ermittelt wird.

6. . Verfahren nach Anspruch 5, **dadurch gekennzeichnet, dass** der Wirkungsgrad mittels mindestens einer Kennlinie (31, 32) ermittelt wird.

7. . Verfahren nach einem der vorangehenden Ansprüche, **dadurch gekennzeichnet, dass** der Wirkungsgrad in Abhängigkeit von einer Leistungsflussrichtung des Motors (7) ermittelt wird

8. . Verfahren nach Anspruch 7, **dadurch gekennzeichnet, dass** die Leistungsflussrichtung in Abhängigkeit von dem Motormoment (tor_RA) und einem Rotorwinkel (ang_RA) des Motors (7) ermittelt wird.

9. . Steuergerät (1) zur Steuerung/Regelung einer Lenkvorrichtung (2) in einem Fahrzeug, wobei die Lenkvorrichtung (2) ein Lenkgestänge (13), ein Lenkgetriebe (11) und einen Motor (7) umfasst und wobei das Steuergerät (1) Mittel zur Erfassung eines Motormoments (tor_RA) und einen Schätzer (21) zur Bestimmung einer von außen auf das Lenkgetriebe (11) einwirkenden Kraft (Fz) aufweist, **dadurch gekennzeichnet, dass** der Schätzer (21) zur Bestimmung der Kraft (Fz) aus einem effektiven Motormoment (tor_RAeff) ausgebildet ist und das Steuergerät (1) eine Funktionalität (20) zur Bestimmung eines Wirkungsgrads in Abhängigkeit von der von dem Schätzer (21) zu der Funktionalität (20) rückgeführten Kraft (Fz) und zur Bestimmung des effektiven Motormoments (tor_RAeff) in Abhängigkeit von dem Motormoment (tor_RA) und dem Wirkungsgrad aufweist.

10. . Steuergerät (1) nach Anspruch 9, **dadurch gekennzeichnet, dass** der Schätzer (21) zur Bestimmung der Kraft (Fz) in Abhängigkeit von einem Lenkwinkel, insbesondere einem Rotorwinkel (ang_RA) des Motors (7), ausgebildet ist.

11. . Steuergerät (1) nach Anspruch 9 oder 10, **dadurch gekennzeichnet, dass** das Motormoment (tor_RA) ein Ist-Moment oder ein Soll-Moment beschreibt.

12. . Steuergerät (1) nach einem der Ansprüche 9 bis 11, **dadurch gekennzeichnet, dass** die Funktionalität (20) zur Ermittlung des effektiven Motormoments (tor_RAeff) in Abhängigkeit von einem Rotorwinkel (ang_RA) des Motors (7) ausgebildet ist.

13. . Steuergerät (1) nach einem der Ansprüche 9 bis 12, **dadurch gekennzeichnet, dass** in dem Steuergerät (1) mindestens eine Kennlinie (31, 32) für die Ermittlung des Wirkungsgrads abgelegt ist.

14. . Steuergerät (1) nach einem der Ansprüche 9 bis 13, **dadurch gekennzeichnet, dass** die Funktionalität (20) zur Ermittlung des Wirkungsgrads in Abhängigkeit von einer Leistungsflussrichtung des Motors (7) ausgebildet ist.

15. . Steuergerät (1) nach Anspruch 14, **dadurch gekennzeichnet, dass** das die Funktionalität (20) zur Ermittlung der Leistungsflussrichtung in Abhängigkeit von dem Motormoment (tor_RA) und einem Rotorwinkel (ang_RA) des Motors (7) ausgebildet ist.

16. . Computerprogramm, das auf einem Steuergerät (1) zur Steuerung und/oder Regelung einer Lenkvorrichtung (2), insbesondere auf einem Mikroprozessor (3) in dem Steuergerät (1) ablauffähig ist, **dadurch gekennzeichnet, dass** das Computerprogramm zur Durchführung eines Verfahrens nach einem der Ansprüche 1 bis 8 programmiert ist.

17. . Computerprogramm nach Anspruch 16, **dadurch gekennzeichnet, dass** das Computerprogramm auf einem Speicherelement (5) abgespeichert ist.

## Claims

1. Method for determining a force (Fz), acting from the outside via a steering linkage (13) on a steering gear (11) of a steering device (2) in a vehicle, by means of an estimator (21), wherein a motor (7) for generating a motor torque (tor_RA) is assigned to the steering device (2), **characterized in that** the force (Fz) which is acting from the outside is estimated as a function of an effective motor torque (tor_RAeff) by means of the estimator (21), wherein the effective motor torque (tor_RAeff) is determined as a function of an efficiency level, and wherein the efficiency level is determined as a function of the estimated force (Fz).

2. Method according to Claim 1, **characterized in that** the force (Fz) is estimated as a function of a steering angle, in particular of a rotor angle (ang_RA) of the motor (7).

3. Method according to Claim 1 or 2, **characterized in that** a total torque (tor_Sum) as a sum of a steering torque (tor_TB), acting via a steering shaft on the steering device (2), and the motor torque (tor_RA) are formed, and the effective motor torque (tor_RAeff) is determined as a function of the total torque (tor_Sum).

4. Method according to one of the preceding claims, **characterized in that** the motor torque (tor_RA) describes an actual torque or a setpoint torque.

5. Method according to one of the preceding claims, **characterized in that** the effective motor torque (tor_RAeff) is determined as a function of a rotor angle (ang_RA) of the motor (7).

6. Method according to Claim 5, **characterized in that** the efficiency level is determined by means of at least one characteristic curve (31, 32).

7. Method according to one of the preceding claims, **characterized in that** the efficiency level is determined as a function of a power flux direction of the motor (7).

8. Method according to Claim 7, **characterized in that** the power flux direction is determined as a function of the motor torque (tor_RA) and a rotor angle (ang_RA) of the motor (7).

9. Control unit (1) for performing open-loop/closed-loop control of a steering device (2) in a vehicle, wherein the steering device (2) comprises a steering linkage (13), a steering gear (11) and a motor (7), and wherein the control unit (1) has means for sensing a motor torque (tor_RA) and an estimator (21) for determining a force (Fz) acting from the outside on the steering gear (11),
**characterized in that** the estimator (21) is designed to determine the force (Fz) from an effective motor torque (tor_RAeff), and the control unit (1) has a functionality (20) for determining an efficiency level as a function of the force (Fz) which is fed back from the estimator (21) to the functionality (20), and to determine the effective motor torque (tor_RAeff) as a function of the motor torque (tor_RA) and the efficiency level.

10. Control unit (1) according to Claim 9, **characterized in that** the estimator (21) is designed to determine the force (Fz) as a function of a steering angle, in particular a rotor angle (ang_RA) of the motor (7).

11. Control unit (1) according to Claim 9 or 10, **characterized in that** the motor torque (tor_RA) describes an actual torque or a setpoint torque.

12. Control unit (1) according to one of Claims 9 to 11, **characterized in that** the functionality (20) is designed to determine the effective motor torque (tor_RAeff) as a function of a rotor angle (ang_RA) of the motor (7).

13. Control unit (1) according to one of Claims 9 to 12, **characterized in that** at least one characteristic curve (31, 32) for determining the efficiency level is stored in the control unit (1).

14. Control unit (1) according to one of Claims 9 to 13, **characterized in that** the functionality (20) is designed to determine the efficiency level as a function of a power flux direction of the motor (7).

15. Control unit (1) according to Claim 14, **characterized in that** the functionality (20) is designed to determine the power flux direction as a function of the motor torque (tor_RA) and a rotor angle (ang_RA) of the motor (7).

16. Computer program which can run on a control unit (1) for performing open-loop and/or closed-loop control of a steering device (2), in particular on a microprocessor (3) in the control unit (1), **characterized in that** the computer program is programmed to carry out a method according to one of Claims 1 to 8.

17. Computer program according to Claim 16, **characterized in that** the computer program is stored on a memory element (5).

## Revendications

1. Procédé pour déterminer une force (Fz) agissant depuis l'extérieur par le biais d'une tringlerie de direction (13) sur un mécanisme de direction (11) d'un dispositif de direction (2) dans un véhicule au moyen d'un dispositif d'estimation (21), au dispositif de direction (2) étant associé un moteur (7) pour générer un couple de moteur (tor_RA), **caractérisé en ce que** la force (Fz) agissant depuis l'extérieur est estimée en fonction d'un couple moteur effectif (tor_RAeff) en fonction d'un rendement et le rendement étant déterminé en fonction de la force (Fz) estimée.

2. Procédé selon la revendication 1, **caractérisé en ce que** la force (Fz) est estimée en fonction d'un angle de direction, notamment d'un angle de rotor (ang_RA) du moteur (7).

3. Procédé selon la revendication 1 ou 2, **caractérisé en ce qu'**un couple somme (tor_Sum) est formé sous forme de somme à partir d'un couple de direction (tor_TB) agissant par le biais d'un arbre de colonne de direction sur le dispositif de direction (2) et du couple moteur (tor_RA) et le couple moteur efficace (tor_RAeff) est déterminé en fonction du couple somme (tor_Sum).

4. Procédé selon l'une quelconque des revendications précédentes, **caractérisé en ce que** le couple moteur (tor_RA) décrit un couple instantané ou un couple de consigne.

5. Procédé selon l'une quelconque des revendications précédentes, **caractérisé en ce que** le couple moteur efficace (tor_RAeff) est déterminé en fonction d'un angle de rotor (ang_RA) du moteur (7).

6. Procédé selon la revendication 5, **caractérisé en ce que** le rendement est déterminé au moyen d'au moins une caractéristique (31, 32).

7. Procédé selon l'une quelconque des revendications précédentes, **caractérisé en ce que** le rendement est déterminé en fonction d'une direction de flux de puissance du moteur (7).

8. Procédé selon la revendication 7, **caractérisé en ce que** la direction du flux de puissance est déterminée en fonction du couple moteur (tor_RA) et d'un angle de rotor (ang_RA) du moteur (7).

9. Appareil de commande (1) pour la commande/régulation d'un dispositif de direction (2) dans un véhicule, le dispositif de direction (2) comprenant une tringlerie de direction (13), un mécanisme de direction (11) et un moteur (7), et l'appareil de commande (1) présentant des moyens pour détecter un couple moteur (tor_RA) et un dispositif d'estimation (21) pour déterminer une force (Fz) agissant depuis l'extérieur sur le mécanisme de direction (11), **caractérisé en ce que** le dispositif d'estimation (21) est réalisé pour déterminer la force (Fz) à partir d'un couple moteur efficace (tor_RAeff) et l'appareil de commande (1) présente une fonctionnalité (20) pour déterminer un rendement en fonction de la force (Fz) renvoyée par le dispositif d'estimation (21) à la fonctionnalité (20) et pour déterminer le couple moteur efficace (tor_RAeff) en fonction du couple moteur (tor_RA) et du rendement.

10. Appareil de commande (1) selon la revendication 9, **caractérisé en ce que** le dispositif d'estimation (21) est réalisé pour déterminer la force (Fz) en fonction d'un angle de direction, notamment d'un angle de rotor (ang_RA) du moteur (7).

11. Appareil de commande (1) selon la revendication 9 ou 10, **caractérisé en ce que** le couple moteur (tor_RA) décrit un couple instantané ou un couple de consigne.

12. Appareil de commande (1) selon l'une quelconque des revendications 9 à 11, **caractérisé en ce que** la fonctionnalité (20) est réalisée pour déterminer le couple moteur efficace (tor_RAeff) en fonction d'un angle de rotor (ang_RA) du moteur (7).

13. Appareil de commande (1) selon l'une quelconque des revendications 9 à 12, **caractérisé en ce qu'**au moins une caractéristique (31, 32) pour la détermination du rendement est consignée dans l'appareil de commande (1).

14. Appareil de commande (1) selon l'une quelconque des revendications 9 à 13, **caractérisé en ce que** la fonctionnalité (20) est réalisée pour déterminer le rendement en fonction d'une direction de flux de puissance du moteur (7).

15. Appareil de commande (1) selon la revendication 14, **caractérisé en ce que** la fonctionnalité (20) est réalisée pour déterminer la direction de flux de puissance en fonction du couple moteur (tor_RA) et d'un angle de rotor (ang_RA) du moteur (7).

16. Programme informatique, qui peut être exécuté sur un appareil de commande (1) pour la commande et/ou la régulation d'un dispositif de direction (2), en particulier sur un microprocesseur (3) dans l'appareil de commande (1), **caractérisé en ce que** le programme informatique est programmé pour mettre en oeuvre un procédé selon l'une quelconque des revendications 1 à 8.

17. Programme informatique selon la revendication 16, **caractérisé en ce que** le programme informatique est mémorisé sur un élément de mémoire (5).
